(19) Europäisches Patentamt

European Patent Office

Office européen des brevets

(11) **EP 0 940 812 B1**

(12) **EUROPEAN PATENT SPECIFICATION**

(45) Date of publication and mention
of the grant of the patent:
**15.11.2006 Bulletin 2006/46**

(51) Int Cl.:
*G11B 21/08* (2006.01) *G11B 21/10* (2006.01)
*G11B 5/584* (2006.01)

(21) Application number: **99301511.4**

(22) Date of filing: **01.03.1999**

(54) **Absolute longitudinal position encoding in linear tape systems**

Absolute longitudinale Positionskodierung in linearen Bandsystemen

Encodage de position longitudinale absolue dans des systèmes de bande linéaire

(84) Designated Contracting States:
**GB NL**

(30) Priority: **04.03.1998 US 34646**

(43) Date of publication of application:
**08.09.1999 Bulletin 1999/36**

(73) Proprietor: **Hewlett-Packard Company
A Delaware Corporation
Palo Alto, CA 94304 (US)**

(72) Inventor: **Fasen, Donald J.
Boise,
Idaho 83713 (US)**

(74) Representative: **Carpmaels & Ransford
43 Bloomsbury Square
London WC1A 2RA (GB)**

(56) References cited:
JP-A- 10 334 435      US-A- 5 055 951
US-A- 5 396 376      US-A- 5 452 150
US-A- 5 689 384

**Description**

FIELD OF THE INVENTION

This invention relates to linear tape systems and to methods of encoding absolute longitudinal position into servo code.

BACKGROUND OF THE INVENTION

Because of its relatively low cost, linear tape is commonly used as a medium for storing large amounts of digital data for archival purposes. For example, disk-based memory is often archived on linear data storage tape.

Data is formatted on linear tapes in a plurality of tracks that extend longitudinally along the tape. A tape head is moveable laterally across the tape to read or write different tracks. In many cases, multiple tracks can be written or read at the same time by using a tape head with multiple read/write elements.

When reading or writing a linear data storage tape, accurate lateral positioning of the tape head is very important. To achieve such accuracy, servo bands are prewritten to the tape. The servo bands are detected by the tape head during reading and writing to determine the exact lateral position of the tape head relative to the linear tape.

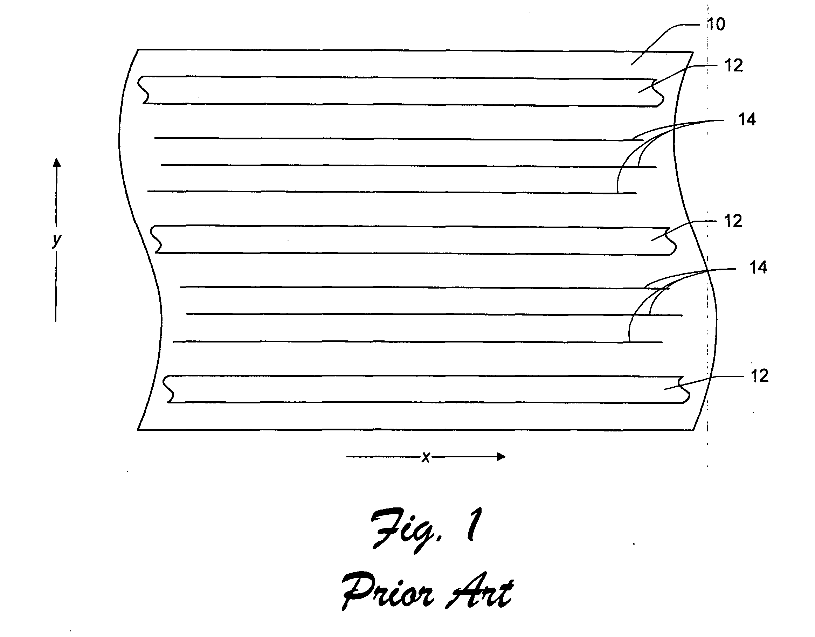

To illustrate the use of servo bands, Fig. 1 shows a segment of a linear tape 10 that extends in a longitudinal direction $x$, and has a lateral dimension $y$. The tape 10 includes a plurality of servo bands 12. In the simplified example of Fig. 1, there are three servo bands. The servo bands are written to the tape during a preparatory formatting process known as "servo writing", prior to actual use of the tape for data storage. The servo bands are spaced laterally from each other by a specified distance.

Data tracks 14 are located between the servo bands 12. The lateral positions of the data tracks 14 are specified relative to the servo bands 12.

When reading or writing tape 10, a tape head senses the servo bands 12 with servo read elements and positions itself precisely relative to the servo bands. Within the tape head, data read/write elements are spaced relative to the servo read elements so that the data read/write elements will be positioned over data tracks 14 when the servo read elements are positioned accurately over the corresponding servo bands 12.

In an actual embodiment, a linear tape might have more than three servo bands. One type of tape head is configured to span two adjacent servo bands at any given time and to read or write only the data tracks between those servo bands. This type of tape head is repositioned to span two different servo bands when reading or writing other data tracks.

There are different ways to derive lateral position information from a servo band. One common way is to divide a servo band into two or more tracks, which are recorded with different information (such as distinct frequencies or bursts occurring at distinct times). A single servo head straddles the boundary between the tracks, and position information is obtained by comparing the amplitude or phase responses of the signals generated from the respective tracks.

A different approach has been described in Albrecht, et al., *Time-Based, Track-Following Servos for Linear Tape Drives,* Data Storage Magazine, 1997 (p. 41). This approach uses a timing-based servo in which a narrow servo head reads a continuously variable servo band.

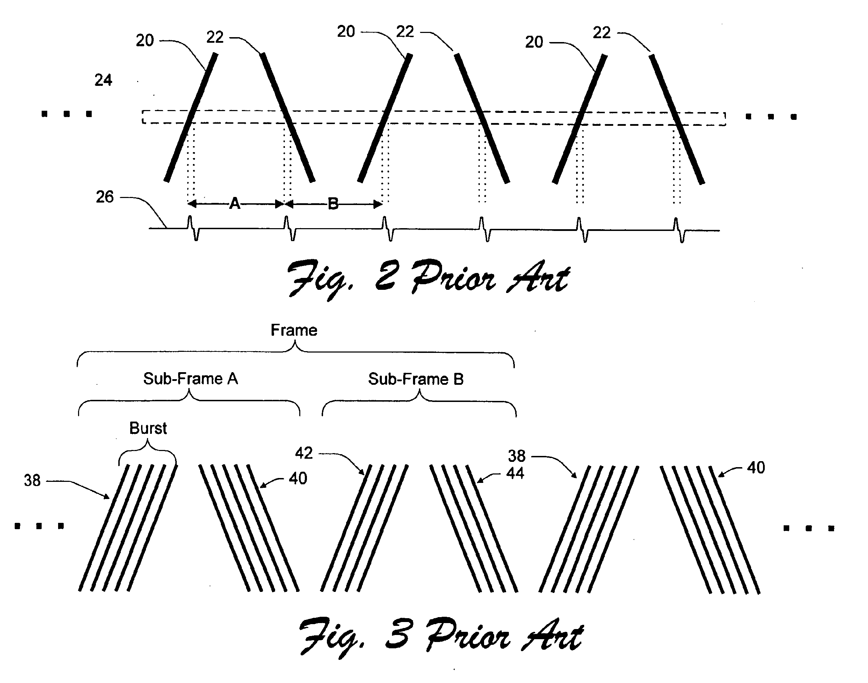

Fig. 2 shows an example of a continuously-variable, timing-based servo pattern, along with a signal generated by a servo read element positioned over the servo pattern. The pattern consists of alternating magnetic transitions at two different azimuthal slopes. Relative timing of pulses generated by the read element depends on the lateral position of the head.

More specifically, the servo band illustrated in Fig. 2 has a series of magnetic transitions 20 and 22, referred to as "stripes", that are recorded on the tape with alternate azimuthal slopes. The stripes 20 have positive slope, while the intervening stripes 22 have negative slopes.

Fig. 2 shows the path and width of the servo head, indicated by reference numeral 24. The servo head reads a lateral width that is significantly less than the full lateral width of the stripes themselves. The signal generated by the servo head is represented by trace 26, illustrated directly below the illustrated magnetic transition stripes. When the servo head encounters a stripe, it generates a positive pulse. When the servo head leaves the stripe, it generates a negative pulse.

Lateral position information is derived by comparing the distances between pulses. For example, a first distance A can be defined as the distance from a positive stripe to the next negative stripe, while a second distance B can be defined as the distance from a negative stripe to the next positive stripe. When the servo head is centered over the servo band, distance A will be equal to distance B, causing consecutive pulses to occur at equal intervals. When the servo head is not centered over the servo band, distance A does not equal distance B, resulting in alternating long and short pulse intervals.

In actual implementation, alternating "bursts" of stripes are used. A burst is defined as one or more individual magnetic transition stripes.

Fig. 3 shows an example of a servo band layout utilizing alternating bursts of magnetic transition stripes. Each burst has an opposite azimuthal slope from the previous burst. The servo pattern includes repeating frames. Each frame has a first subframe A and a second subframe B. Each subframe has a pair of bursts, with the bursts of each frame having different azimuthal slopes. Subframe A has a first burst 38 with five equally-spaced stripes having a positive azimuthal slope. Subframe A has a second burst 40 with five equally-spaced stripes having negative azimuthal slopes. Subframe B has similar bursts 42 and 44, except each of these bursts has only four stripes rather than five.

It is preferable to record servo bands on a tape prior to its actual use for storing data. In order to ensure precise spacing of servo bands such as shown in Figs. 2 and 3, it is desirable to use a patterned servo write head, configured to simultaneously write corresponding stripes of multiple servo bands.

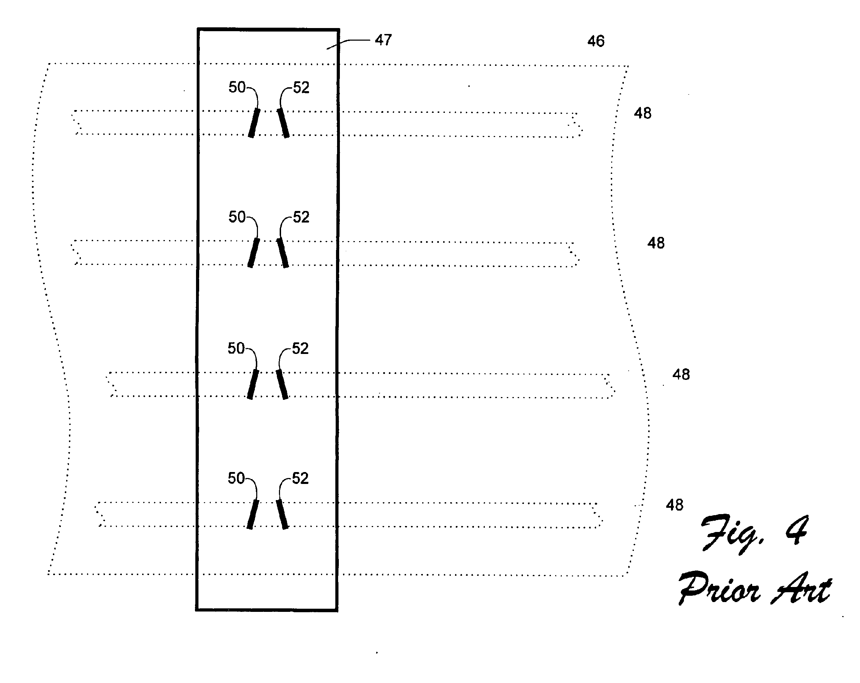

Fig. 4 shows an example of patterned servo write head for writing multiple servo bands on a single linear tape. The head's write pattern is illustrated relative to an underlying linear tape 46 that has four servo bands 48. At lateral positions corresponding to each servo band, the write head pattern includes pairs of write elements or gaps. One element 50 of each pair is configured to produce a magnetic transition stripe having a positive slope. Another element 52 of each pair is configured to produce a magnetic transition stripe having a negative slope. Using this configuration, a single current pulse to the head writes stripes simultaneously to all of the servo bands. Such pulses are repeated to produce stripes in the desired pattern, with the desired spacing.

During manufacturing, the servo writing unit lays down servo bands on a long continuous strand of magnetic tape, which is usually rolled in a flat reel called a "pancake". The pancake is segmented into multiple shorter tape strands, which are used to build individual tape cartridges. As an example, a pancake might consist of a tape strand that is 5000 to 6000 meters in length. Conventional tape cartridges typically range from a large size of 500-600 meters down to smaller sizes. Accordingly, each pancake can be used to make at least 8 to 10 cartridges, or more depending on the cartridge size.

Conventional servo bands are identical over the entire length of the pancake. A manufacture can "cut" the pancake at any length desired for different size cartridges. The uniform servo pattern facilitates this random segmentation.

While servo bands are useful and necessary for lateral control of the read/write elements, conventional servo control unfortunately offers no assistance in defining longitudinal position of the tape. In other words, a tape head cannot determine from the servo bands whether it is near the beginning of the tape or the end of the tape. However, longitudinal information such as beginning of tape (BOT) and end of tape (EOT) is useful so that the tape system can accurately control the longitudinal speed of the tape when it starts at the beginning or nears the end.

To provide longitudinal information, manufacturers have typically relied on physical demarcations, such as punching holes in the tape. One hole pattern designates the BOT and another hole pattern designates the EOT. Other hole patterns may be used to indicate positions near the BOT or EOT.

Another approach to providing longitudinal information is to use clear leaders attached to each end of the tape. The read/write head is equipped with an optical sensor to detect the presence of a clear leader as a way of indicating BOT or EOT.

These approaches are not very well liked because they require physical alteration of the tape (i.e., punching holes) or costly addition of clear leaders to the tape and optical sensors to the read/write head. Moreover, while these approaches provide BOT and EOT information, they do not provide absolute longitudinal position information at other locations of the tape. A tape head still cannot detect if it is one-third, or one-half, or thirteen-sixteenths of the way along the tape.

Accordingly, there is a need for a better approach to placing EOT and BOT information on a linear tape, and for providing absolute position information over the entire length of the tape.

U5-A-5055951 (cf. the preamble of claims 1 and 6) describes an arrangement for recording servo blocks on a tape medium in the form of diagonal band, wherein each servo block is indexed, e.g. by recording an additional servo segment or by omitting one of the servo segments at some desired point in the servo block.

US-A-5689384 describes a track-following servo system in which servo patterns are recorded onto a tape medium in the form of a number of identical frames of perpendicular and diagonal bands separated by intervals. The length of the interval between each adjacent pair of frames can take on at least two different values so as to encode data such as tape longitudinal position.

SUMMARY OF THE INVENTION

In accordance with a first aspect of the present invention there is provided a method of encoding data as defined in claim 1.

In accordance with a second aspect of the present invention there is provided a method of reading data which are encoded within a servo band of a linear data storage tape as defined in claim 6.

In accordance with a third aspect of the present invention there is provided a system for producing a linear storage tape as defined in claim 7.

In the described implementation, the absolute position information is encoded as a 31-bit code comprising a 5-bit leading ID, a 14-bit absolute position value, a 7-bit error correction code, and a 5-bit trailing ID. The absolute position value is initialized to a beginning value (e.g., zero or one) and incremented for each absolute position mark over the length of the pancake.

When the manufacturer sections the pancake into segments, each tape segment has a different starting and ending absolute position value. For instance, one tape segment might have absolute position values ranging from 1 to 1015, a second tape segment might have absolute position values ranging from 1025 to 2055, and so forth. These segments are then used to construct the tape cartridges.

The manufacturer can then run a process to search the entire tape of each cartridge to locate absolute position values near the beginning of the tape and near the end of the tape. The selected beginning value is designated as the beginning of tape (BOT) and the ending value is designated as the end of tape (EOT). These values are then saved to the tape for later use by the tape reading system. With the BOT and EOT values known, a tape reading system can count the intermediate periodic position marks to obtain precise longitudinal position of the tape.

BRIEF DESCRIPTION OF THE DRAWINGS

Fig. 1 shows a segment of a prior art linear tape and illustrates the layout of servo bands and data tracks on the linear tape.

Fig. 2 illustrates a timing pattern utilized on the servo bands of the linear tape shown in Fig. 1, along with a trace of a read signal resulting from the timing pattern.

Fig. 3 illustrates a timing pattern similar to that of Fig. 2, using bursts of magnetic transitions or stripes.

Fig. 4 is a diagrammatic view illustrating a prior art servo write head writing a pattern into an underlying linear tape.

Fig. 5 is a simplified block diagram of a servo write system.

Fig. 6 illustrates a servo band pattern with data encoded into individual frames within the bands.

Fig. 7 illustrates individual frames within the servo band pattern of Fig. 6.

Fig. 8 illustrates a process of manufacturing individual tape cartridges from a linear tape pancake.

Fig. 9 is a simplified block diagram of a linear tape storage system.

DETAILED DESCRIPTION OF THE INVENTION

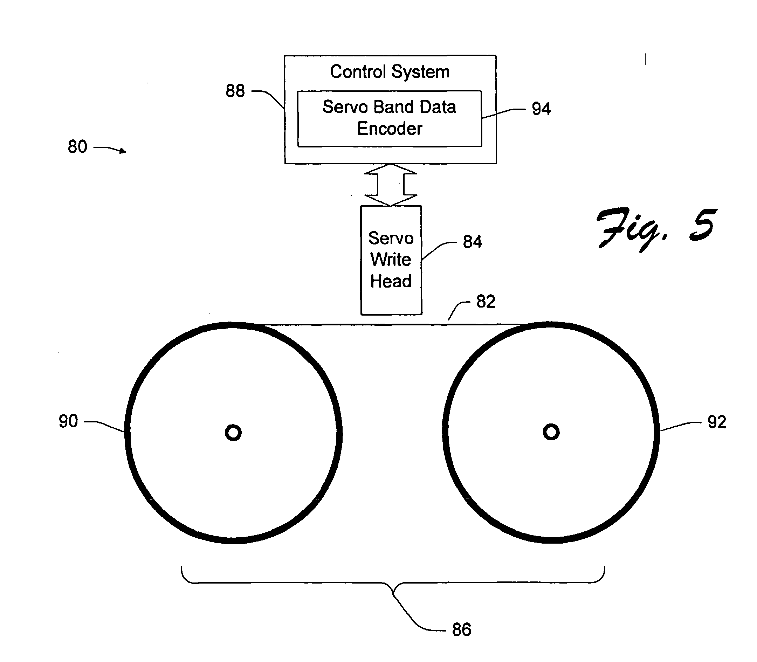

Fig. 5 shows a servo write system 80 for writing servo bands onto a linear storage tape 82 during manufacturing. The servo write system 80 has a servo write head 84, a drive system 86 to transport the tape through the system, and a control system 88. The tape 82 is initially wound on a large source reel 90. During servo write, the tape is passed beneath the servo write head 84 and collected on a collection reel 92. The servo write head 84 writes one or more servo bands longitudinally on the tape as it is passed underneath.

The control system 88 sends the current pulses to the servo write head 84 to controllably deposit magnetic transition stripes on the tape. The pulses are output in such a manner to produce repeatable frames of stripes with specified spacing. The control system 88 implements a servo band data encoder 94 that causes the servo write head 84 to alter stripe configurations within individual frames. By altering the stripe configurations, the encoder 94 is able to encode data into the stripes that form the servo band. In the illustrated implementation, the servo band data encoder 94 is an absolute longitudinal position encoder that encodes absolute longitudinal position information into the servo bands. However, other types of data may be encoded including manufacturer's ID, manufacturing date, or any other information available at the time of servo writing.

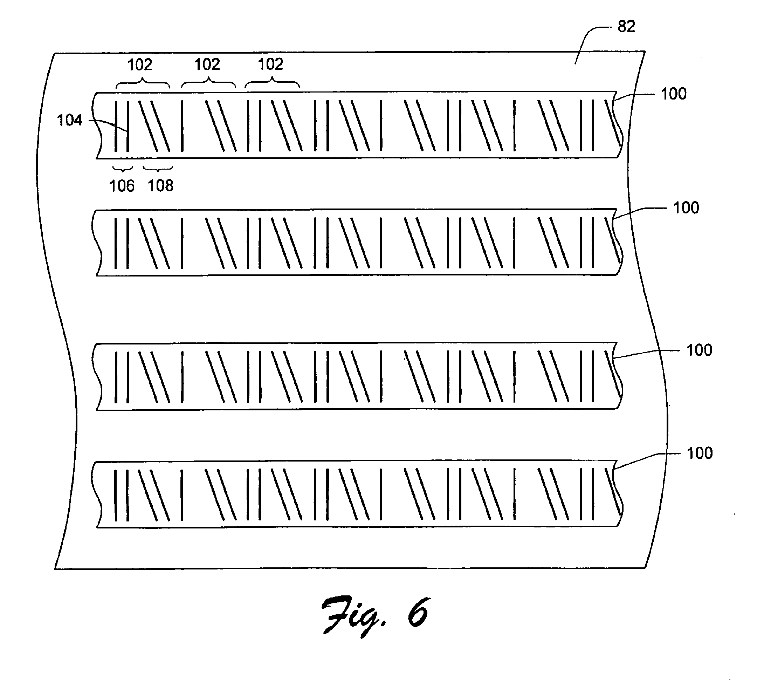

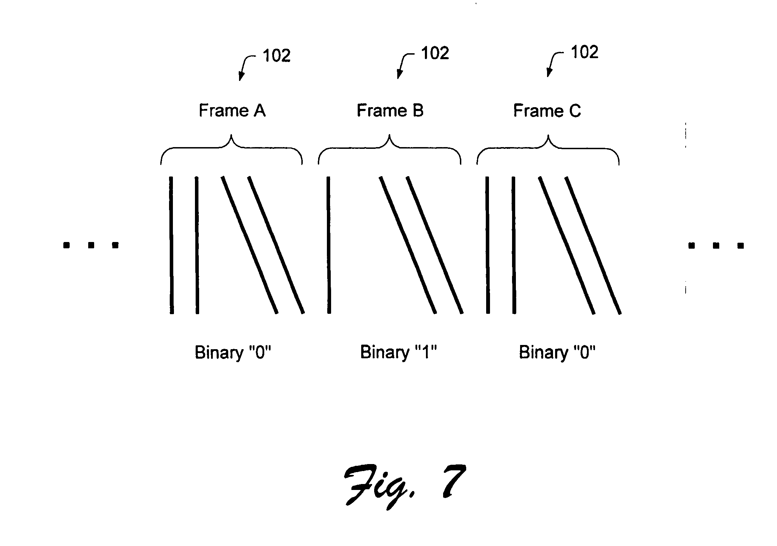

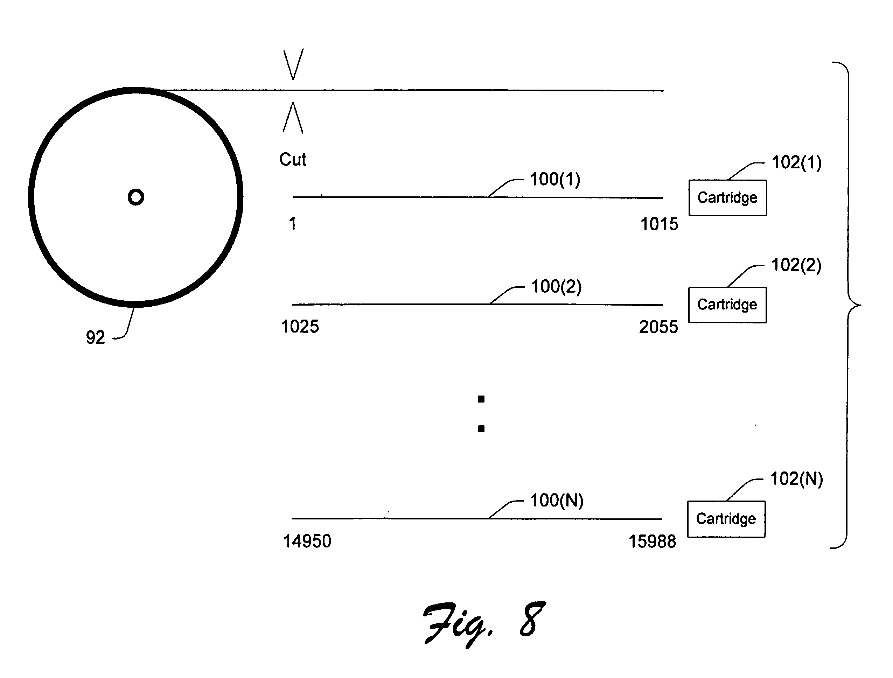

Fig. 6 shows a segment of a linear data storage tape 82 having multiple servo bands 100 extending longitudinally along the tape. In this example, the tape has four servo bands. A plurality of data tracks (not shown) are positioned between respective pairs of servo bands. Note that Fig. 6 is drawn for purposes of conceptual illustration, and does not therefore indicate relative sizes of the various illustrated tape features. Each servo band 100 contains a longitudinal pattern of repeating frames 102 magnetic transition stripes 104. In this example, each frame 102 contains a burst of vertical stripes of zero azimuth, referenced by number 106, followed by a burst of angled stripes 108 of nonzero azimuth (e.g., negative ten degree slope), referenced by number 108.

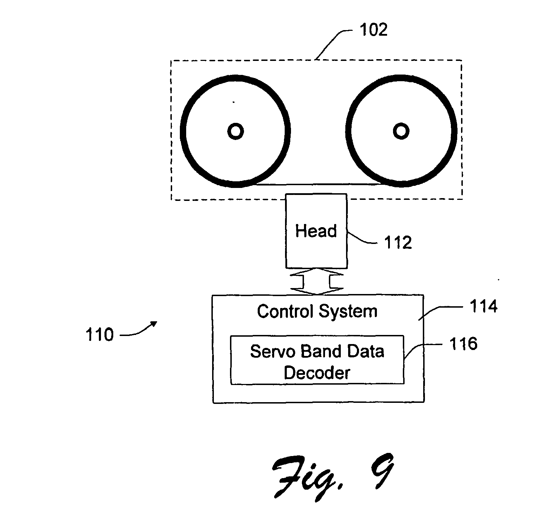

Fig. 7 shows the first three frames 102 in more detail to illustrate an example servo band pattern that is encoded with data. The three consecutive frames are labeled A, B, and C. Each zero-azimuth burst 106 within a frame contains one or two stripes 104. Frames A and C each have two vertical stripes, whereas frame B has only one vertical stripe. Each nonzero-azimuth burst 108 contains two angled stripes.

Data is encoded into one or more of the servo bands as binary values of "1" or "0" by altering the stripe configuration within each frame. In this example, a frame having two vertical stripes and two angled stripes (such as frames A and C) yields a first binary value, such as a binary "0". A frame with only one vertical stripe and two angled stripes (such as frame B) yields a second binary value, such as a binary "1". Thus, in this example, the encoder encodes binary data into the servo bands by selectively leaving or dropping one of the zero-azimuth stripes.

It is noted, however, that the repeating frames can have other striping configurations that yield identifiable binary values. Other striping configurations with each frame might consist of more than two stripes per burst, or have angled stripes in both bursts, or other arrangements.

The data is preferably encoded into every servo band so that a single servo write head can be used to lay down one uniform pattern on the linear tape. But, the manufacturer may elect to encode the data in less than all the servo bands, or even just one band.

One particular type of data that can be encoded into the servo band is absolute longitudinal position. During manufacturing, the encoder 94 writes absolute position marks at equally spaced intervals in the servo code. The marks could be spaced, for example, every 0.5 m of tape. It is noted, however, that the APOS marks may be written more or less frequently than every 0.5 m, although it is preferable that the marks be equally spaced.

According to one implementation, each mark has a data format comprising a leading ID field, an absolute position value (APOS) field, an error correction code (ECC) field, and a trailing ID field. The mark format is represented as follows:

$$\text{ID1} \mid \text{APOS} \mid \text{ECC} \mid \text{ID2}$$

The leading and trailing ID fields provide an identifiable bit pattern that sets off the absolute position mark. For example, the ID fields might be a specific N-bit pattern, such as a binary pattern of a "1" followed by "0"s. The absolute position value field holds an N-bit value that is incremented with each mark. Thus, the first mark placed on the tape might be a value 1, the second mark might be a value 2, an so on. The error correction field provides a K-bit value for ensuring a correct absolute position value.

Each absolute position mark is formed from consecutive bits encoded into the servo code, with one bit per frame. In Fig. 7, the three consecutive frames A, B, and C provide three consecutive bits 0, 1, and 0.

As an example implementation, the leading and trailing ID fields are both 5-bit fields, the APOS field is a 14-bit field, and the ECC field is a 7-bit field. This yields marks of 31 bits. With one bit per frame, one absolute position mark consumes 31 consecutive frames. With a 14-bit APOS field, the encoder can write 16,384 marks spaced evenly at every 0.5 m over a linear tape of 8,192 m.

With additional encoding, fewer frames may be used to represent an APOS mark. However, care is taken not to drop all of the zero-azimuth (or vertical) stripes in one frame for fear of losing the entire frame from detection. Accordingly, the encoding scheme assumes that each frame has at least one of its two zero-azimuth stripes.

With these stipulations, an encoding scheme can be derived in which two consecutive frames encode three bits by manipulating the four zero-azimuth stripes. As an example, Table 1 lists eight possible 3-bit values derived from sequential pairs of stripes. In Table 1, the mark "1 1" implies that both zero-azimuth stripes in the same frame are present, the mark "1 0" means the first zero-azimuth stripe is present and the second zero-azimuth stripe is absent in the same frame, and the mark "0 1" means the first zero-azimuth stripe is absent and the second zero-azimuth stripe is present in the same frame.

**Table 1**

| Zero-Azimuth Stripes in 1st Frame | Zero-Azimuth Stripes in 2nd Frame | 3-bit Value |
|---|---|---|
| 11 | 11 | 000 |
| 11 | 10 | 001 |
| 11 | 01 | 010 |
| 10 | 11 | 011 |
| 10 | 10 | 100 |
| 1 0 | 01 | 101 |
| 01 | 11 | 110 |
| 01 | 10 | 111 |

By encoding three bits in every two consecutive frames, an absolute longitudinal position mark can be embedded into 22 frames of the servo band, or nine fewer frames than the one-bit-per-frame approach.

Fig. 8 illustrates the process of converting the pancake into several tape cartridges. Once the servo write system 80 has written the servo bands and encoded absolute longitudinal position marks over the entire tape, the pancake 92 is sectioned into segments 100(1)-100(N) of one or more lengths. Since the APOS marks are placed on the tape in order from a value 1 to a value of, say 16,000, each segment 100 has a different starting and ending number. In Fig. 8, the first segment 100(1) has a starting APOS mark of 1 and an ending APOS mark of 1015. The second tape segment 100(2) has a starting APOS mark of 1025 and an ending mark of to 2055. Each tape segment is then manufactured into tape cartridges 102(1)-102(N).

Fig. 9 shows a linear storage tape system 110 that reads data from and writes data to a tape cartridge 102. System 110 includes a tape read/write head 112, a drive system (not shown) that transports the tape past the tape head, and control electronics 114. The control electronics 114 has a servo band data decoder 116 that decodes the data embedded in the frames of the servo band.

When a blank cartridge 102 is loaded, the linear storage tape system 110 scans the entire tape to locate a "beginning" APOS mark near the start of the tape and an "ending" APOS mark near the end of the tape. Suppose that the cartridge 102 has a first APOS mark of 1025 and a last APOS mark of to 2055. The tape system 110 can identify these marks and return these values as the beginning and ending APOS marks.

Alternatively, the linear storage system 110 might run through a series of marks (e.g. 30-50 marks) at the beginning and end to make sure the marks are readable, balanced, and incrementing as designed. The linear storage system 110 might then designate one of the marks at the beginning and end of the tape to be the beginning and ending APOS marks. For instance, the system might elect the 48th mark at the beginning of the tape to be the "beginning" APOS mark and the 39th mark from the end of the tape to be the "ending" APOS mark. In this case, if one of these marks should somehow be lost during the life of the tape, the system can still identify the missing mark from the serial stream of marks before and following it.

The system 110 then associates the beginning APOS mark with the beginning of tape and the ending APOS mark with the end of tape. The system then knows that marks near the beginning APOS mark are near the BOT and marks near the ending APOS mark are near the EOT. The system 110 may also assign early warning marks that are spaced certain specified distances from the BOT or EOT.

The system 110 records the APOS mark values for the EOT, BOT, and any intervening early warning marks at the beginning of the tape. From that point on, this information is immediately available for any subsequent reading of the tape cartridge, so that the system 110 can avoid scanning the entire tape each time the tape is read. The distance between adjacent APOS marks may also be recorded on the tape, or else is inherently known as the primary or only spacing used on such linear tapes.

As a result of encoding the APOS marks in the servo band, the linear storage tape system 110 is capable of determining the longitudinal position of the tape head relative to linear tape. During operation, the system 110 detects the repeating frames of magnetic transition stripes in the servo band. The system 110 differentiates between frames with two zero-azimuth stripes and frames with one zero-azimuth stripe. Depending on the decoding scheme, the system decodes the different arrangements of stripes in consecutive frames to recover the data encoded in the servo band.

As the embedded bits are recaptured, the system 110 recognizes the ID fields that set off the APOS field. The system 110 reconstructs the 14-bit APOS field and checks the result using the 7-bit ECC field. With the APOS value, the system 110 knows its position from the BOT (i.e., present mark relative to first mark on tape) or from the EOT (i.e., present mark relative to last mark on tape). The system 110 may also track every mark by incrementing the values up (or down) as the tape moves forward (or reverse) beneath the read/write head.

The linear storage tape system 110 can be implemented at the manufacturer so that the EOT and BOT information is recorded on the tape cartridge before sale. Alternatively, the linear storage tape system 110 can be any system resident at an end user that simply performs the scan and EOT/BOT assignments on the first use of the tape cartridge.

The invention has been described in language specific to structural features and/or methodological steps. It is to be understood, however, that the invention defined in the claims is not necessarily limited to the specific features or steps described above. Rather, the specific features and steps are disclosed as exemplary forms of implementing the claimed invention.

## Claims

1. A method of providing absolute longitudinal position information on a linear data storage tape (82), comprising the following steps:

   writing one or more servo bands (100) longitudinally along the linear data storage tape (82); and
   encoding the absolute longitudinal position information into the servo bands (100);
   **characterised in that**

each of the servo bands (100) has a longitudinal pattern of repeating frames (102) of magnetic transition stripes (104), and

the absolute longitudinal position information encoded into the servo bands (100) by altering a striping configuration within individual frames.

2. A method as claimed in claim 1, wherein each frame comprises a set of one or more zero-azimuth stripes (106) followed by a set of one or more nonzero-azimuth stripes (108), and said each frame encodes a binary value by selectively leaving or dropping at least one of the zero-azimuth stripes (106).

3. A method as claimed in claims 1 or claim 2, wherein said data comprise information which identifies the longitudinal position along the linear data storage tape (82).

4. A method as claimed in any preceding claim, wherein the absolute longitudinal position information comprises multiple encoded marks of different absolute position values spaced along the linear data storage tape (82), and the method further comprising the following steps:

scanning the linear data storage tape (82) to locate a first mark near a beginning of the tape (82) and a second mark near an end of the tape (82); and

associating the first mark with the beginning of the tape (82) and the second mark with the end of the tape (82).

5. A method as claimed in claim 4, further comprising the step of recording the absolute position values of the first and last mark on the tape (82) to identify the beginning of the tape (82) and the end of the tape (82).

6. A method of determining longitudinal position of a tape head relative to a linear data storage tape by reading data which are encoded within a servo band (100) of the linear data storage tape (82), **characterised by** the following steps:

detecting repeating frames (102) of magnetic transition stripes (104) in the servo band (100) of the linear data storage tape (82), each repeating frame having a different arrangement of stripes which encode the absolute longitudinal position information; and

decoding the different arrangements of stripes in the frames to recover the absolute longitudinal position information encoded in the servo band (100).

7. A system for producing a linear storage tape (82), comprising:

a servo write head (84) arranged to place a plurality of magnetic transition stripes (104) onto the linear data storage tape (82), the servo write head (84) arranging the stripes in repeating frames (102) to form a servo band (100) used in lateral position control; and

an encoder (94) arranged to cause the servo write head (84) to alter the stripe arrangements within individual frames to encode absolute longitudinal position information into the servo band (100).

8. A system as claimed in claim 7, wherein the encoder (94) is arranged to encode said absolute position information into the servo band (100) for use in longitudinal position control.

**Patentansprüche**

1. Ein Verfahren zum Bereitstellen von Absolutlängspositionsinformationen auf einem linearen Datenspeicherband (82), das die folgenden Schritte aufweist:

Schreiben eines oder mehrerer Servobänder (100) längs entlang des linearen Datenspeicherbands (82); und
Codieren der Absolutlängspositionsinformationen in die Servobänder (100);
**dadurch gekennzeichnet, dass**
jedes der Servobänder (100) eine Längsstruktur sich wiederholender Rahmen (102) von Magnetübergangsstreifen (104) aufweist; und
die Absolutlängspositionsinformationen in die Servobänder (100) codiert werden, indem eine Streifengebungskonfiguration innerhalb einzelner Rahmen verändert wird.

**2.** Ein Verfahren gemäß Anspruch 1, bei dem jeder Rahmen einen Satz eines oder mehrerer Null-Azimut-Streifen (106), gefolgt durch einen Satz eines oder mehrerer Nicht-Null-Azimut-Streifen (108) aufweist und jeder Rahmen einen Binärwert durch ein selektives Belassen oder Fallenlassen zumindest eines der Null-Azimut-Streifen (106) codiert.

**3.** Ein Verfahren gemäß Anspruch 1 oder Anspruch 2, bei dem die Daten Informationen aufweisen, die die Längsposition entlang des linearen Datenspeicherbands (82) identifizieren.

**4.** Ein Verfahren gemäß einem der vorherigen Ansprüche, bei dem die Absolutlängspositionsinformationen mehrere codierte Markierungen unterschiedlicher absoluter Positionswerte aufweisen, die entlang des linearen Datenspeicherbands (82) beabstandet sind, und wobei das Verfahren ferner die folgenden Schritte aufweist:

Abtasten des linearen Datenspeicherbands (82), um eine erste Markierung nahe an einem Anfang des Bands (82) und eine zweite Markierung nahe an einem Ende des Bands (82) zu lokalisieren; und
Zuordnen der ersten Markierung zu dem Anfang des Bands (82) und der zweiten Markierung zu dem Ende des Bands (82).

**5.** Ein Verfahren gemäß Anspruch 4, das ferner den Schritt eines Aufzeichnens der Absolutpositionswerte der ersten und der zweiten Markierung auf dem Band (82), um den Anfang des Bands (82) und das Ende des Bands (82) zu identifizieren, aufweist.

**6.** Ein Verfahren zum Bestimmen einer Längsposition eines Bandkopfs relativ zu einem linearen Datenspeicherband durch Lesen von Daten, die in ein Servoband (100) des linearen Datenspeicherbands (82) codiert sind, **gekennzeichnet durch** die folgenden Schritte:

Erfassen sich wiederholender Rahmen (102) von Magnetübergangsstreifen (104) in dem Servoband (100) des linearen Datenspeicherbands (82), wobei jeder sich wiederholende Rahmen eine unterschiedliche Anordnung von Streifen aufweist, die die Absolutlängspositionsinformationen codieren; und
Decodieren der unterschiedlichen Anordnungen von Streifen in den Rahmen, um die Absolutlängspositionsinformationen, die in das Servoband (100) codiert sind, wiederzugewinnen.

**7.** Ein System zum Herstellen eines linearen Speicherbandes (82), das folgende Merkmale aufweist:

einen Servoschreibkopf (84), der angeordnet ist, um eine Mehrzahl von Magnetübergangsstreifen (104) auf dem linearen Datenspeicherband (82) zu platzieren, wobei der Servoschreibkopf (84) die Streifen in sich wiederholenden Rahmen (102) anordnet, um ein Servoband (100) zu bilden, das bei einer seitlichen Positionssteuerung verwendet wird; und
einen Codierer (94), der angeordnet ist, um zu bewirken, dass der Servoschreibkopf (84) die Streifenanordnungen innerhalb einzelner Rahmen verändert, um Absolutlängspositionsinformationen in das Servoband (100) zu codieren.

**8.** Ein System gemäß Anspruch 7, bei dem der Codierer (94) angeordnet ist, um die Absolutpositionsinformationen zur Verwendung bei einer Längspositionssteuerung in das Servoband (100) zu codieren.

**Revendications**

**1.** Procédé destiné à fournir des informations relatives à une position longitudinale absolue sur une bande de stockage de données linéaire (82), comprenant les étapes suivantes consistant à :

écrire sur une ou plusieurs bandes servo magnétiques (100) de manière longitudinale le long de la bande de stockage de données linéaires (82) ; et
encoder les informations relatives à une position longitudinale absolue dans les bandes servo magnétiques (100) ;
**caractérisé en ce que**
chacune des bandes servo magnétiques (100) a un motif longitudinal de trames répétitives (102) de pistes magnétiques de transition (104) ; et
les informations relatives à une position longitudinale absolue encodées dans les bandes servo magnétiques (100) par modification d'une configuration de pistes à l'intérieur des trames individuelles.

2. Procédé selon la revendication 1, dans lequel chaque trame comprend un ensemble d'une ou plusieurs pistes d'azimut nul (106) suivi d'un ensemble d'une ou plusieurs pistes d'azimut non nul (108), et chacune desdites trames encode une valeur binaire en laissant ou abandonnant sélectivement au moins une des pistes d'azimut nul (106).

3. Procédé selon la revendication 1 ou 2, dans lequel lesdites données comprennent des informations qui identifient la position longitudinale le long de la bande de stockage de données linéaires (82).

4. Procédé selon l'une quelconque des revendications précédentes, dans lequel les informations relatives à une position longitudinale absolue comprennent de multiples marques encodées de différentes valeurs de position absolue espacées le long de la bande de stockage de données linéaires (82), et le procédé comprend en outre les étapes suivantes consistant à :

balayer la bande de stockage de données linéaires (82) pour positionner une première marque près d'un début de la bande (82) et une seconde marque près d'une fin de la bande (82) ; et
associer la première marque au début de la bande (82) et la seconde marque à la fin de la bande (82).

5. Procédé selon la revendication 4, comprenant en outre l'étape consistant à enregistrer les valeurs de position absolue des première et dernière marques sur la bande (82) pour identifier le début de la bande (82) et la fin de la bande (82).

6. Procédé destiné à déterminer une position longitudinale d'une tête de bande relativement à une bande de stockage de données linéaire par lecture des données qui sont encodées à l'intérieur d'une bande servo magnétique (100) de la bande de stockage de données linéaires (82), **caractérisé en ce qu'**il comprend les étapes suivantes consistant à :

détecter des trames répétitives (102) de pistes magnétiques de transition (104) dans la bande servo magnétique (100) de la bande de stockage de données linéaire (82), chaque trame répétitive ayant un agencement différent de piste qui encodent les informations relatives à une position longitudinale absolue ; et
décoder les différents agencements des pistes dans les trames pour récupérer les informations relatives à une position longitudinale absolue encodées dans la bande servo magnétique (100).

7. Système destiné à produire une bande de stockage linéaire (82), comprenant :

une tête d'écriture servo magnétique (84) agencée de façon à placer une pluralité de pistes magnétiques de transition (104) sur la bande de stockage de données linéaire (82), la tête d'écriture servo magnétique (84) agençant les pistes dans des trames répétitives (102) pour former une bande servo magnétique (100) utilisée dans la commande de la position latérale ; et
un encodeur (94) agencé de façon à amener la tête d'écriture servo magnétique (84) à modifier les agencements des pistes à l'intérieur des trames individuelles pour encoder des informations relatives à une position longitudinale absolue dans la bande servo magnétique (100).

8. Système selon la revendication 7, dans lequel l'encodeur (94) est agencé pour encoder lesdites informations relatives à une position absolue dans la bande servo magnétique (100) utilisée dans une commande de la position longitudinale.

*Fig. 1*
*Prior Art*

EP 0 940 812 B1

*Fig. 2 Prior Art*

*Fig. 3 Prior Art*

EP 0 940 812 B1

Fig. 4
Prior Art

Fig. 5

Fig. 6

Fig. 7

EP 0 940 812 B1

*Fig. 8*

EP 0 940 812 B1

102

Head — 112

110 —

Control System — 114

Servo Band Data Decoder — 116

*Fig. 9*